(19) Europäisches Patentamt / European Patent Office / Office européen des brevets

(11) **EP 2 770 772 B1**

(12) **EUROPEAN PATENT SPECIFICATION**

(45) Date of publication and mention
of the grant of the patent:
**08.04.2015 Bulletin 2015/15**

(51) Int Cl.:
**H04W 24/04** *(2009.01)*          *H04W 24/10* *(2009.01)*
**H04W 84/04** *(2009.01)*

(21) Application number: **13360003.1**

(22) Date of filing: **26.02.2013**

(54) **Cell failure compensation method and network node**

Zellfehlerkompensierungsverfahren und Netzwerkknoten

Procédé de compensation de défaillance de cellules et noeud de réseau

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.08.2014 Bulletin 2014/35**

(73) Proprietor: **ALCATEL LUCENT
92100 Boulogne-Billancourt (FR)**

(72) Inventors:
• **Razavi, Rouzbeh
Blanchardstown
Dublin 15 (IE)**
• **Claussen, Holger
Blanchardstown
Dublin 15 (IE)**

(74) Representative: **Sarup, David Alexander
Alcatel-Lucent Telecom Ltd
Intellectual Property Business Group
Christchurch Way
Greenwich
London SE10 0AG (GB)**

(56) References cited:
**US-A1- 2002 004 406     US-A1- 2012 113 860**

• **RAQUEL BARCO ET AL: "A unified framework for
self-healing in wireless networks", IEEE
COMMUNICATIONS MAGAZINE, IEEE SERVICE
CENTER, PISCATAWAY, US, vol. 50, no. 12, 1
December 2012 (2012-12-01), pages 134-142,
XP011483274, ISSN: 0163-6804, DOI:
10.1109/MCOM.2012.6384463**
• **AMIRIJOO M ET AL: "Cell outage management in
LTE networks", WIRELESS COMMUNICATION
SYSTEMS, 2009. ISWCS 2009. 6TH
INTERNATIONAL SYMPOSIUM ON, IEEE,
PISCATAWAY, NJ, USA, 7 September 2009
(2009-09-07), pages 600-604, XP031545160, ISBN:
978-1-4244-3584-5**
• **Thomas Kürner (editor) ET AL: "Final Report on
Self-Organisation and its Implications in Wireless
Access Networks (SOCRATES Deliverable
D5.9)", , 17 January 2010 (2010-01-17),
XP055036636, Retrieved from the Internet: URL:
http://www.fp7-socrates.org/files/Deli verables/
SOCRATES_D5.9%20Final%20report%20
on%20self-organisation%20and%20its%20impli
cations%20in%20wireless%20access%20netwo
rk s.pdf [retrieved on 2012-08-28]**

**Description**

FIELD OF THE INVENTION

The present invention relates to a cell failure compensation method for a heterogeneous telecommunications network and a to network node.

BACKGROUND OF THE INVENTION

It is known to provide heterogeneous telecommunications networks comprising a plurality of small cells and at least one macro cell. Such heterogeneous telecommunications networks are typically provided due to their reduced coverage range, low cost and high performance. The coverage range of the small cells within a heterogeneous network enables the spectrum efficiency that can be attained to be much higher than that achievable using macro cells alone. Further, by using small cells, improved services and higher data rates can be realised due to the proximity of transmitters and the receivers.

Wireless cellular telecommunications has become an increasingly integral part of everyday life, and as such, network operators must strive to ensure 100% reliability of their networks without any disruption of service. In order to ensure uninterrupted high Quality of Experience for users, operators must strive to ensure users receive network service with no downtime, even for a few hours or even minutes, regardless if the downtime is due to an unexpected fault, disaster or planned routine maintenance. In the event of a failure, planned or otherwise, of a cell in the network, compensating actions can be performed in neighbouring cells to maintain network service and ensure maximum Quality of Experience to the user.

The document "A Unified Framework for Self-Healing in Wireless Networks" by Raquel Barco et al. summarizes the state of the art with respect to the self-healing functionality of self-organizing networks (SON) including a fault compensation function. The aim of this function is to minimize the degradation in network performance when a call is in outage by executing real-time algorithms to automatically determine parameter adjustments of neighbour cells, in consideration of flexible operator policy.

It is desirable to provide an improved cell failure compensation method in a heterogeneous telecommunications network.

SUMMARY OF THE INVENTION

According to an aspect of the invention, there is provided a cell failure compensation method for a heterogeneous telecommunications network having a plurality of small cells, the method comprising: obtaining a plurality of measurement snapshots from the plurality of the small cells in the network over a period of time, the measurement snapshots comprising a plurality of parameters; calculating for a first cell outage configuration in a first time window, the first cell outage configuration corresponding to a network configuration in which at least one small cell has failed, objective functions for small cells in the first cell outage configuration that have not failed based on the plurality of measurement snapshots; and determining an optimal configuration for the first cell outage configuration in the first time window based on the calculated objective functions, such that in the event of a failure in the network corresponding to the first cell outage configuration in the first time window, the plurality of small cells in the network is reconfigurable based on the determined optimal configuration.

By using measurement snapshots from the cells in the network and determining an optimal configuration in the event of a particular network failure in a particular time window based on the measurement snapshots, the method can take into account long-term user distribution and traffic demands according to the time at which a fault occurs. For example, if a first cell were to fail in a first time window, the determined optimal configuration may indicate that it is appropriate to route traffic to a second cell, whereas if the same first cell were to fail in a second time window, the determined optimal configuration may indicate that it is appropriate to route traffic to a third cell due to large traffic demands on the second cell in the second time window.

Embodiments provide a cell failure compensation method that is fully autonomous and takes into account long-term users' distribution and traffic demands according to the time at which a fault occurs, is fully standard compliant, is agnostic to the underlying wireless access technology (e.g. SDMA, LTE, GSM), can be customised to take into account different KPIs decided by the mobile operator (can consider both coverage and capacity constraints), is especially stable and scales very well (suitable for the future heterogeneous scenarios) and is responsive to the changes in the network.

The method may further comprise detecting a failure in the network in the first time window corresponding to the first cell outage configuration; and reconfiguring the plurality of small cells in the network based on the determined optimal configuration.

The first cell outage configuration may be one of a plurality of cell outage configurations and the first time window may be one of a plurality of time windows.

The method may comprise determining an optimal configuration for each cell outage configuration in each time window.

The optimal configurations are pre-determined and pre-stored for use in the event of a cell failure in the network.

The method may further comprise: detecting a failure of a particular small cell or cells in a particular time window; determining which cell outage configuration corresponds to that particular failure; retrieving the pre-stored optimal configuration for the determined cell outage configuration in the particular time window; and reconfiguring the plurality of small cells in the network based on the retrieved optimal configuration.

The objective function may be a one or more Key Performance Indicators and may include coverage and/or capacity. The objective function may be any suitable Key Performance Indicator.

The step of calculating an objective function for a particular cell outage configuration in a particular time window, may comprise combining measurement snapshots associated with the first time window to calculate the path loss from each user to the base station of each cell and the residual interference plus noise for each user from all base stations in a reference configuration.

The step of calculating an objective function for a particular cell outage configuration in a particular time window, may further comprise: calculating the interference from other cells in the particular cell outage configuration based on the calculated path loss from each user to the base station of each cell; calculating the signal to noise ratio of each user in the network based on the residual interference plus noise and the calculated interference from other cells; and estimating the achievable throughput of each user and network coverage parameters based on the calculated signal to noise ratio.

The plurality of parameters in a measurement snapshot may comprise a snapshot identification, the number of active users being served by the cell, the signal to interference plus noise ratio (SINR) of each of the active users, the received pilot power from other cells and own cell measured by each active user, the pilot power of the small cell, the cell selection bias values, the dedicated data transmission power per active user, and the total transmit power of the small cell. The snapshot identification may comprise the identification of the small cell, a sequence number of the snapshot and a time stamp.

The plurality of measurement snapshots from the plurality of the small cells may be obtained in approximate synchronization. The plurality of measurement snapshots from the plurality of the small cells may be obtained with time offsets in the order of a few hundred milliseconds. The plurality of measurement snapshots from the plurality of the small cells may be obtained with time offsets in the range of 0 to 500 milliseconds.

The plurality of small cells may comprise a cluster of small cells subject to outside interference.

The hours of a day may be divided into a plurality of time windows on the basis of demand in the network.

According to another aspect of the invention, there is provided a network node in a heterogeneous telecommunications network having a plurality of small cells, wherein the network node is operable to receive a plurality of measurement snapshots from the plurality of the small cells in the network over a period of time, the measurement snapshots comprising a plurality of parameters; calculate for a first cell outage configuration in a first time window, the first cell outage configuration corresponding to a network configuration in which at least one small cell has failed, objective functions for small cells in the first cell outage configuration that have not failed based on the plurality of measurement snapshots; and determine an optimal configuration for the first cell outage configuration in the first time window based on the calculated objective functions, such that in the event of a failure in the network corresponding to the first cell outage configuration in the first time window, the plurality of small cells in the network are reconfigurable based on the determined optimal configuration.

According to another aspect of the invention, there is provided a computer program product operable when executed on a computer, to perform the above-described method.

Further particular and preferred aspects of the invention are set out in the accompanying independent and dependent claims.

<u>BRIEF DESCRIPTION OF THE DRAWINGS</u>

Some embodiments of the apparatus and/or methods in accordance with embodiments of the present invention are now described, by way of example only, and with reference to the accompanying drawings, in which:

Figure 1 shows a example of a heterogeneous telecommunications network comprising a small cell cluster consisting five small cell base-stations and a macro cell; and

Figure 2 schematically shows the control system for the heterogeneous telecommunication network of Figure 1;

Figure 3 is a flow chart describing the cell failure compensation method of an embodiment; and

Figure 4 is a flowchart of describing the cell failure compensation method of another embodiment.

DESCRIPTION OF THE EMBODIMENTS

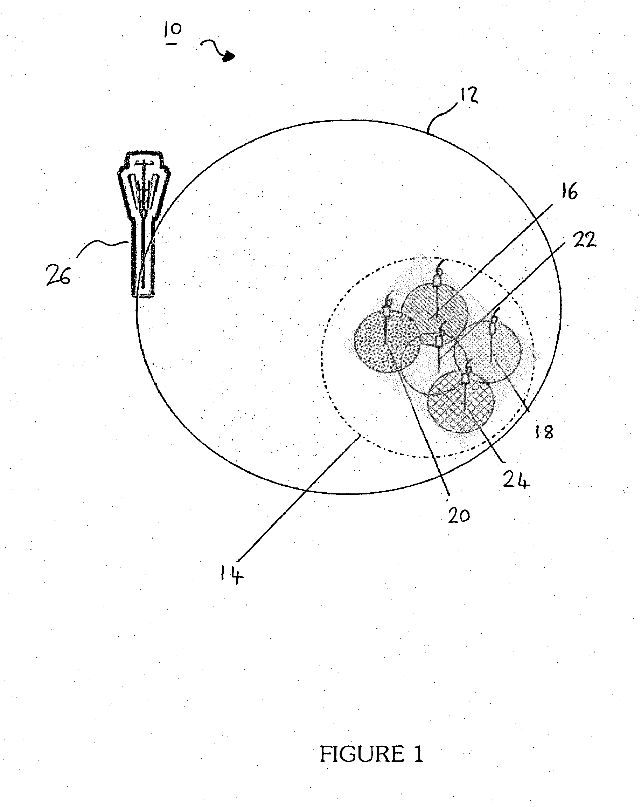

Figure 1 illustrates a heterogeneous telecommunications network 10 comprising a macro cell 12 and a cluster of small cells 14. The cluster of small cells 14 comprises a first small cell 16, a second small cell 18, a third small cell 20, a fourth small cell 22 and a fifth small cell 24. The small cells are distributed geographically to provide an area of coverage within the macro cell 12. User equipment (not shown) may roam through the network 10. When the user equipment is located within the macro call 12, communications may be established between the user equipment and the base station 26 over an associated radio link. If the user equipment is located geographically within one of the small cells 16, 18, 20, 22 and 24, communications may be established between the user equipment and the base station of the associated small cell over an associated radio link. Of course, it will be appreciated that Figure 1 shows only an example heterogeneous network and that a plurality of macro cells may be provided, more or less than five small cells may be provided and a plurality of small cell clusters may be provided.

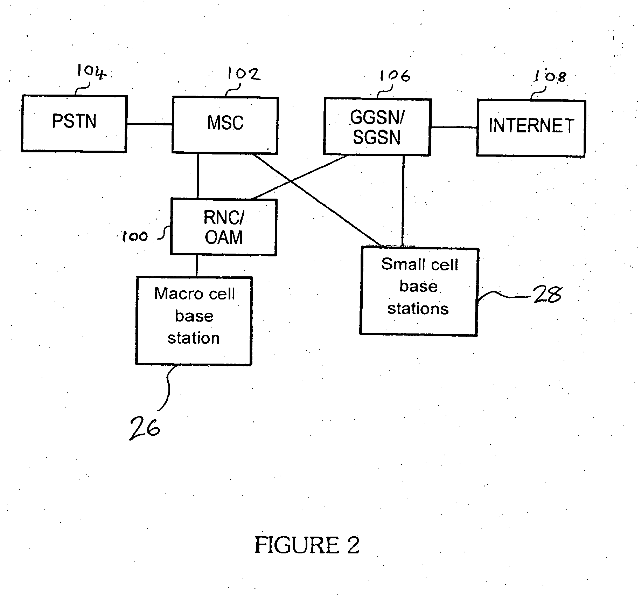

Figure 2 schematically shows the control system for the heterogeneous telecommunication network 10. The heterogeneous telecommunications network 10 is managed by a network controller 100 which includes a radio network controller (RNC) and an operations administration manager (OAM). The network controller 100 controls operation of macro cell 12 and any other macro cells (not shown) by communicating with the base station(s) of the macro cell(s) over a communications link. The network controller 100 also communicates with the user equipment via their respective radio links in order to efficiently manage the wireless communications system 10.

The network controller 100 maintains a neighbour list which includes information about the geographical relationship between any macro cells supported by base stations as well as details of any small cells such as small cell cluster 14, within the macro cells. In addition, the network controller 100 maintains historic location information which provides information on the previous locations of the user equipment within the wireless communications system 10 to enable future predictions on user equipment location to be made. The network controller 100 is operable to route traffic via circuit switched and packet switched networks. Hence, a mobile switching centre 102 is provided with which the network controller 100 may communicate. The mobile switching centre 102 then communicates with a circuit switched network such as a public switched telephone network (PSTN) 104. Likewise, the network controller 100 communicates with Serving General Packet Radio Service Support Nodes (SGSNs) and a Gateway General Packet Radio Support Node (GGSN) 106. The GGSN then communicates with a packet switched core 108 such as, for example, the Internet.

As described above, within the macro cell 12, there is provided a plurality of small cell base station which provide a plurality of small cells 16, 18, 20, 22, and 24. The small cells provide local communications coverage for a user in their vicinity. The base stations 28 of the small cells communicate with the MSC 100 and the SGSN 106. As a user equipment comes within range of a small cell, such as the first small cell 16, a handover occurs between the base station 26 of the macro cell and the base station 28 of the small cell, when the base station of the small cell detects that user equipment comes within range. Likewise, as a user equipment comes within range of a different small cell, a handover occurs between the base station of the current small cell and the base station of the new small cell, when the base station of the new small cell detects that user equipment comes within range.

Consider the situation of a user equipment communicating with the base station of the first small cell 14 of Figure 1 over a communications link. Should the communication link between the user equipment and the base station fail for any reason, or should the base station of the small cell itself fail, it is necessary to be able to maintain service to the user equipment. This may be achieved by handing over the network traffic associated with the first small cell at the time of failure to one or more of the adjacent small cells.

Embodiments provide a self-healing mechanism for small cell base stations where for each base station a set of configuration settings are calculated that it can switch to immediately upon notification/detection of outage of any of its neighboring small cell base-stations. The configuration settings consist of two important cell configuration elements namely the pilot power and the range extension bias values. Both are used to define the coverage area of a small cell.

In addition, embodiments also realize that configuration settings should be dependent on the time at which the outage occurs, as demand within the network can vary throughout the day. In order to take into account variations in user demand intensity and distribution, a day can be divided into a number of time-windows and a configuration settings corresponding to each time-window can then be derived.

The time-windows may have different lengths and can be defined differently for each of the week days as the user distribution and traffic demand intensity normally varies significantly intra-day. For example one time window may be defined between 09:00 and 11:00 on a Monday morning where demand intensity may be high and another time window may be defined between 18:00 and 23:00 on a Sunday evening where demand intensity may be low.

By deriving a configuration settings corresponding to each time window, each base-station knows which configuration to use upon notification/detection of outage of any other base-stations, at any given time.

Consider the heterogeneous network of Figure 1 and consider an example with six distinct intra-day time-windows defined as follows:

Time_window_1: From 00:00 to 06:00
Time_window_2: From 06:00 to 10:00
Time_window_3: From 10:00 to 12:00
Time_window_4: From 12:00 to 16:00
Time_window_5: From 16:00 to 21:00
Time_window_6: From 21:00 to 24:00

Given the above time-windows, each base-station stores configuration settings indicating the parameters to use upon outage of any of the other base-stations at any given time-window. In other words, each base station has a plurality of cell outage configurations in which other cell or cells have failed, and a configuration setting is stored for each cell outage configuration that corresponds to each time window.

Let $C_{i,j}^{t}$ denote the configuration setting that $i^{th}$ cell needs to apply in case of the outage of j$^{th}$ cell during t$^{th}$ time window. Based on this notation, if the third base station 20 fails at 15:30 (that is in 4$^{th}$ time-window), the first base station 16 needs to apply the configuration indicated by $C_{1,3}^{4}$. If the problem is not resolved until 16:00 (that's the end of the 4$^{th}$ time-window), the first base station 16 would need to apply the configuration indicated in $C_{1,3}^{5}$ and so on. Once the outage is resolved all base-stations would use their default configuration.

In some embodiments, all of the configuration settings are pre-calculated, such that each base-station can immediately apply them upon detection/notification of a failure and there would be no service disruption. The said configuration settings may comprise, but are not limited to, the pilot power and the range extension bias values to be used by the small cell base-stations.

Embodiments provide a method to derive the configuration settings in an autonomous and standard compliant manner taking into account real user distributions as well as the coverage and capacity constraints over different intra-day time-windows. To achieve this, small cell base-stations collect a set of user measurement snap shots over a period of time and exchange those measurement snap shots in order to construct a global model of the network which can be used to derive the optimal configuration in case of neighbour cell outage. In one example, the period of time over which the measurement snap shots are collected may be over a period of a few days, and the snap shots may be sampled every 10 seconds. It should be appreciated that the time period may be any duration and the sampling frequency may be any frequency such that real user distributions as well as the coverage and capacity constraints over different intra-day time-windows may be determined.

It is desirable that the snapshots should be recorded approximately synchronously amongst all cells. This can be achieved by collecting the snapshots with the same frequency and time-offset. The synchronization can be done, for example, through coordination from the macro cell using IEEE 1588 time synchronization standard or other methods such as Network Time Protocol (NTP). It is important to note that some embodiments do not require a very high level of synchronization accuracy and even time offsets in orders of few hundred milliseconds can be acceptable. It should be understood that the term approximately synchronously therefore means that there may be time offsets in orders of few hundred milliseconds. In other words, it should be appreciated that the plurality of measurement snapshots from the plurality of the small cells may be obtained with time offsets in the range of 0 to 500 milliseconds.

A measurement snapshot may contain a snapshot ID that includes the ID of the cell, the sequence number of the snapshot and a time stamp. A measurement snapshot may also contain the number of active users being served by each cell. A measurement snapshot may also contain the Signal to Interference plus Noise Ratio (SINR) of each of the active users (expressed in dB). A measurement snapshot may also contain a received pilot power from other (and own) cells (if detectable) measured by each active user. A measurement snapshot may also contain a pilot power of the cell in dBm. A measurement snapshot may also contain cell selection bias values (if there are any). A measurement snapshot may also contain a dedicated downlink (DL) transmit power per active user. A measurement snapshot may also contain a total transmit power of the cell in dBm.

Once enough snapshots are collected, small cells and the underlying macrocell(s) send their recordings to a central network entity (network node). This network node could be the small cell gateway, the macro cell or any other suitable network element such as for example the network controller 100. Indeed, the snapshots may be sent to the base station of a small cell itself, in which case the base station of the small cell would act as the central network entity (network node).

Once the measurement snap shots are combined, to provide a global model of the network, any given cell outage configuration can be evaluated. That is, considering that a given base-station being dismissed (failed), the optimal configuration for the rest remaining cells can be searched for. This takes into account the time-interval at which the outage has occurred.

An objective function may be calculated for for each cell outage configuration in each time window. From the calculated objective functions, an optimized objective function is found for each particular cell outage configuration at each particular time window. The objective function to be optimized may be a Key Performance Indicator (KPI) and may be focused on coverage, capacity, a combination of these, or other additional metrics. For example, the operator may want to maximise the achievable throughput for all users whilst ensuring minimum coverage holes within the network. Users' throughput can be considered as function of the transmit power for the user, the quality of channel and the number of other users served in the network (i.e. SINR).

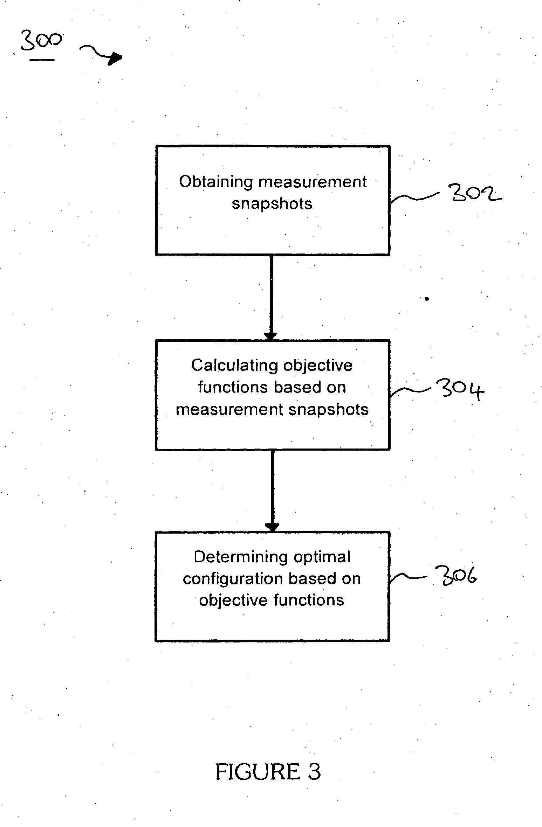

Figure 3 is a flow chart describing the cell failure compensation method 300 of an embodiment. As can be seen in Figure 3, the method 300 comprises a first step 302 of obtaining a plurality of measurement snapshots from the plurality of the small cells in the network over a period of time. As described above, the measurement snapshots comprise a plurality of parameters. A step 304 is provided of calculating for a first cell outage configuration in a first time window, the first cell outage configuration corresponding to a network configuration in which at least one small cell has failed, objective functions for small cells in the first cell outage configuration that have not failed based on the plurality of measurement snapshots. Finally, a third step 306 is provided of determining an optimal configuration for the first cell outage configuration in the first time window based on the calculated objective functions, such that in the event of a failure in the network corresponding to the first cell outage configuration in the first time window, the plurality of small cells in the network can be reconfigured based on the determined optimal configuration

In the method of Figure 3, by using snapshot measurements from all cells, the central entity is capable of estimating the objective function for any given configuration setting for all cells.

In order to estimate the objective function for any given configuration setting for all cells, the followings steps may be performed.

1. Using the snapshots from all cells, calculate the estimated path-loss between each active user and other cells (using the transmit pilot from each cell and the received pilot power at each user) during any given time-window.

2. Using the snapshot reported from each cell, for each cell's user, to determine the useful signal component, derived based on dedicated transmit DL power to the user and the estimated path loss between the user and the serving cell.

3. Using the snapshot reported from each cell, for each cell's user, estimate the total Interference Plus Noise (IPN) component, given that the useful signal component and the SINR values are given, IPN can be estimated, as would be apparent to the skilled person.

4. Using the snapshots from all cells, for each user, estimate the interference contribution from each of the other cells.

5. Given the IPN and the sum of the interference from all exiting cells, calculate the Residual Interference Plus Noise (RIPN) component. This quantity reflects the noise and interference from all sources other than the existing cells (e.g. noise).

6. Assume a given cell has failed in a given time-window.

7. Use the snap-shot measurements collected during the given time-window.

8. Using the estimated path loss quantities, and a given new configuration settings for the remaining cells, update users' cell association.

9. Update cells' load and calculate calls drop rate as a result of coverage holes.

10. Using the estimated path loss quantities, estimate the useful signal component for each user.

11. Using the estimated path loss quantities and updated cells' association estimate the interference impact of each cell on each user.

12. Using the RIPN quantities calculated in step 4 for each user, and the interference component from each cell (calculated in step 11), estimate the updated total Interference Plus Noise (IPN) component for each user.

13. Given the useful signal component for each user estimated in step 10, and the updated total Interference Plus Noise (IPN) component derived in previous step, calculate the updated SINR values.

14. Derive the achievable users' throughput from SINR quantities and updated cells' load.

By performing the above steps for all outage configurations of all small cell base-stations and for each time-window, optimal configuration of the remaining cells can be found when a given cell is considered to be dysfunctional at any given time-window.

The calculated objective functions can be evaluated in order to find the optimal one. This can be done through exhaustive search (when the search space is limited) or by using other search algorithms such as the Gradient Descent (GD) or any other suitable methods. To achieve this, the central node should be capable of evaluating the objective function for any given configuration in an offline manner and based on the model that is constructed according to the exchanged snapshots. To do that, the following steps may be performed:

Once the achievable throughput is calculated for each user and for all snapshots that falls within the given time-window, the objective function corresponding to the given configuration setting can be consequently estimated. Then, using an optimization or a search mechanism, different configuration settings can be evaluated in order to find the optimal settings.

To express the above steps more formally, let define the following notations.

- Let $B$ to represent the set of base-stations (including small cells and macro cells)
- Let $P^P(b)$ to be the pilot transmit power of base-station $b$ ($b \in B$)
- Let $P^D(b)$ to be the power dedicated to downlink data channel at base-station $b$($b \in B$)
- Let $P^T(b)$ to represent the total transmit power of base-station $b$($b \in B$)
- Let $\delta(b)$ to denote the cell association bias for base-station $b$ ($b \in B$). A user, $u$, selects base-station $b_1$ over base-station $b_2$ as its serving cell if

$$R(u,b_1) + \delta(b_1) > R(u,b_2) + \delta(b_2)$$

- Let $N(b)$ to denote the number of active users for base-station $b$($b \in B$)
- Let $U$ to represent the set of users
- Let $SB(u)$ to represent the serving base-station of user $u$($u \in U$)
- Let $IN^{Tot}(u)$ to represent the total Interference plus Noise at user $u$($u \in U$)
- Let $SINR(u)$ to represent the SINR of user $u$($u\ U$) expressed in dB
- Let $IN^{other}(u)$ to denote the Interference plus Noise components at user $u$ ($u \in U$) from all sources other than the set of base-station, $B$, considered (e.g. Noise component or interference from neighbouring macro cell)
- Let $S(u)$ to denote the useful signal component received from the serving cell at user at user $u$($u\ U$)
- Let $PL(u,b)$ to be the path-loss between user $u$($u \in U$) and base-station $b$($b \in B$)
- Let $R(u,b)$ to be the received pilot power at user $u$($u\ U$) from base-station $b$($b\ B$)
- Let $I(u,b)$ to represent the total interference from base-station $b$($b \in B$) at user $u$ ($u \in U$)

Additionally, let consider a subscript notation to distinguish between the above quantities when they are corresponding to the reference scenario, r, and when are associated to a new configuration vector, c. For example $SB_r(u)$ represents the serving base-station of user $u$($u \in U$) in the reference scenario and $SB_c(u)$ shows the same quantity when configuration vector, c is applied instead of the settings in the reference scenario. In principle, the reference scenario is used to calculate the users' path loss and other interference plus noise components that can be used for evaluating any other configuration setting. Based on these notations, the above steps can be mathematically expressed as follows.

$$1. \, \forall u \in U, \forall b \in B : PL_r(u,b) = P_r^P(b) - R_r(u,b)$$

That is, the estimated path-loss between each active user and the base station of each small cell during each time window is determined using the measurement snapshots, by subtracting the pilot power received at the user from the base station, from the pilot transmit power of that base station.

$$2. \, \forall u \in U : S_r(u) = P_r^D(SB_r(u)) - PL_r(u, SB_r(u))$$

That is, the useful signal component received at each user from a serving small cell during each time window using the measurement snapshots is determined, by subtracting the path-loss between each user and the base station of the serving small cell from the power dedicated to the downlink data channel of the base station of the serving small cell.

$$3. \, \forall u \in U : IN_r^{tot}(u) = S_r(u) - SINR_r(u)$$

That is, the total Interference Plus Noise component of each user during each time window using the measurement snapshots is determined, by subtracting the Signal to Noise Ratio at each user from the useful signal component received at each user.

$$4. \forall u \in U, \forall b \in B \setminus SB_r(u): I_r(u,b) = P_r^T(b) - PL_r(u,b)$$

That is, the total interference at each user from each base station, excluding the base station of the serving small cell, during each time window is determined using the measurement snapshots, by subtracting the path loss between each user and each base station from the total transmit power of each base station.

$$5. \forall u \in U : IN_r^{other}(u) = IN_r^{tot}(u) - ld\left(\sum_{\forall b \in B \setminus SB_r(u)} dl(I_r(u,b))\right)$$

That is, the residual interference plus noise component for each user from all sources other than the small cells during each time window is determined using the measurement snapshots, by subtracting the total interference at each user from the plurality of small cells excluding the serving base station, from the total interference at each user.

It should be noted here that *ld(.) is a function to convert* values on a linear scale to the corresponding quantities in decibel scale; that is $ld(x) = 10\log_{10}(x)$ and *dl(.)* is a function to convert values on a decibel scale to the corresponding quantities in linear scale; that is

$$dl(x) = 10^{\frac{x}{10}}.$$

Now consider a configuration vector c is to be evaluated. The vector contains new pilot and cell association bias for all base-stations assuming that one cell has failed (zero pilot power, zero data power). However, as mentioned earlier, the path loss and the other interference and noise component is independent of base-station's configuration. That is to say,

$$\forall u \in U, \forall b \in B : PL_c(u,b) = PL_r(u,b) \text{ and } \forall u \in U : IN_c^{other}(u) = IN_r^{other}(u).$$

Considering new configuration vector, c, we have

$$6. \forall u \in U : SB_c(u) = \arg\max_{b \in B}\left(P_c^P - PL_c(u,b) + \delta(b)\right)$$

That is, determining which base station of the plurality of small cells is the optimal serving base station for each user in each small cell outage configuration and in each time window, by determining for each user which base station has the highest pilot transmit power minus the path loss between the user and that base station plus the cell association bias for that base station.

$$7. \forall b \in B : N_c(b) = \sum_{u \in U} x(u) \ where \ x(u) = \begin{cases} 1 \ if \ SB_c(u) = b \\ 0 \ \ otherwise \end{cases}$$

That is, updating the number of users in each base station of the plurality of small cells in each small cell outage configuration and in each time period based on the determined optimal serving base station.

$$8. \forall u \in U : S_c(u) = P_c^D(SB_c(u)) - PL_c \ u, SB_c(u)$$

That is, determining the useful signal of each user in each small cell outage configuration and in each time period, by subtracting the path-loss between the each user and the serving base station from the power dedicated to the downlink data channel of the serving base station.

$$9. \forall b \in B : P_c^T(b) = ld \ dl \ P_c^r(b) + N_c(b) dl \ P_c^r(b)$$

That is, determining the total transmit power of each base station of the plurality of small cells for each small cell outage configuration and in each time period, by adding the pilot transmit power of the base station to the power dedicated to the downlink data channel multiplied by the number of users for that base station.

$$10. \ \forall u \in U, \forall b \in B \setminus SB_c(u) : I_c(u,b) = P_c^T(b) - PL_c(u,b)$$

That is, determining the total interference from all base stations except the serving base station by subtracting the path loss between each user and each base station except the serving base station from the total transmit power of each base station except the serving base station.

$$11. \ \forall u \in U : IN_c^{tot}(u) = IN_c^{other}(u) + ld \left( \sum_{\forall b \in B \setminus SB_c(u)} dl \big( I_c(u,b) \big) \right)$$

That is, determining the total interference plus noise for each user by adding the interference plus noise components at each user from all sources other than the set of base-station, considered (e.g. Noise component or interference from neighbouring macro cell) to the sum of the total interference from all base stations except the serving base station.

$$12. \ \forall u \in U : SINR_c(u) = S_c(u) - IN_c^{tot}(u)$$

That is, determining the SINR of each user by subtracting the total interference plus noise for each user from the useful signal component received from the serving base station.

$$13. \ \forall u \in U : T_c(u) = f \big( SINR_c(u), N_c(SB_c(u)) \big)$$

That is, determining the throughout by applying a function to the SINR. Where *f* is the function used to map the SINR and number of users to the achievable throughput.

If small cells are not deployed too densely, their interactions will be marginal (i.e. changing the configuration settings of one small cell will not have a significant impact on performance of another small cell). In such scenarios, the main interaction is between each small cell and the underlying macro cell and hence the optimal configuration for each small cell can be found independent of other small cells. In this case, the optimal configuration settings can be found in a exhaustive search manner for each of the small cells. The case is also true when there are only very few small cells in the coverage area of the underlying macro cell.

On the other hand, if there are a number of small cells that are deployed densely, they may not be considered independent and hence the number of configuration settings to be evaluated in case of an exhaustive search mechanism increases as all combination of configurations ought to be tried out. While this may still not be of issue, since these calculations are performed offline without any impact on the network's real-time performance, and can be dispatched to cloud-based computation resources for example, it is possible to use other search mechanisms such as the Gradient Descent (GD) methods or any other suitable statistical method to find the optimal or near optimal settings.

It is desired that the above procedure be repeated for all cells and for all time-windows. The optimal configurations can then be stored in each of the small cell base-stations. Upon notification/detection of a neighbouring cell's outage, all base-stations would then know the optimal configuration at any given time-window. Calculation of the optimal configuration can be repeated time to time (e.g. every month or two) to account for any changes in the users' distribution or traffic demand intensity. Additionally, the operator can enforce re-calculation of these configurations at any time.

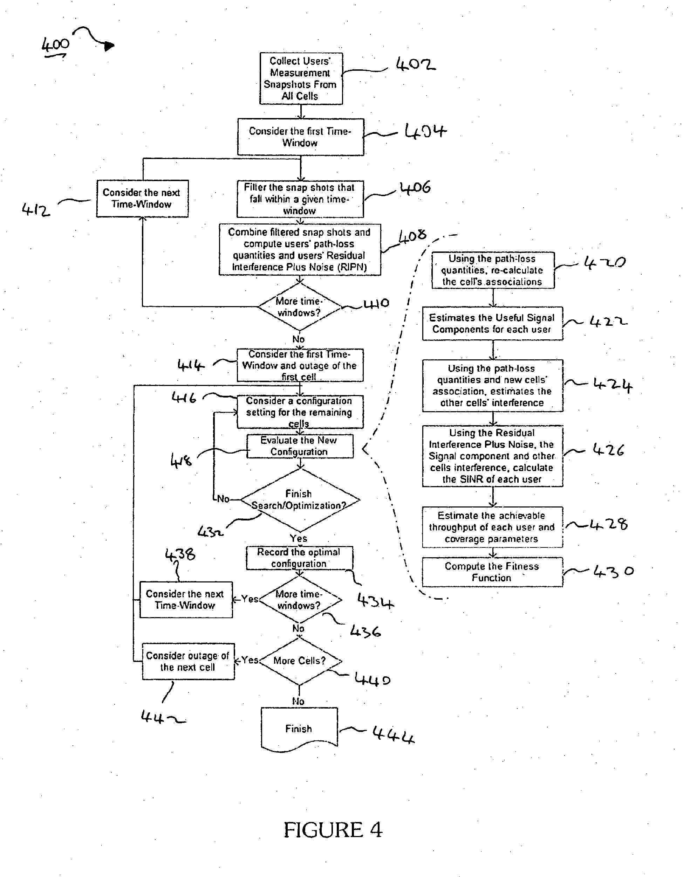

Figure 4 shows the flowchart diagram of a method 400 according to an embodiment. In Figure 4, the evaluation of a new configuration has been further expanded in the functional blocks shown on the right hand side.

In Figure 4, the method comprises a first step 402, the measurement snap shots are collected. In step 404, the first time window is considered. In step 406, the measurement snap shots are filtered to find the snap shots that fall within the first time window. In step 408, the filtered snap shots are combined and the users' path-loss quantities and the users Residual Interference Plus Noise (RIPN) are calculated. In step 410, it is determined if there are more time windows. If there are, the method proceeds to step 412 where the next time window is considered and steps 406 to 410 are repeated. If there are no more time windows, the method proceeds to step 414.

In step 414, the first time window and the outage of the first cell are considered. In step 416 a configuration, a new cell outage configuration setting for the remaining cells is considered. In step 418, the new configuration is evaluated.

In step 420, by using the above calculated path loss quantities, the cells associations in the new configuration are re-calculated. In step 422, the useful signal components for each user in the new configuration are estimated. In step 424, the path-loss quantities and the new cells associates are used to estimate the interference from other cells. In step 426, using the RIPN calculated in step 408, the single component and the interference from other cells, the SINR of each user is calculated. In step 428, the achievable throughout of each user is estimated and in step 430, the objective (fitness) function is calculated.

In step 432, it is determined if the search for new configurations/optimization is complete. If not, the next configuration setting is considered and the steps 416 to 430 are repeated as necessary for that next cell outage configuration setting. If at step 432 it is determined that the search for new configurations/optimization is complete for the first time window, the method proceeds to step 434 in which the optimal configuration is recorded.

The method then proceeds to step 436, where is determined if there are further time windows to evaluate. If there are further time windows to evaluate then the process proceeds to step 438 where the next time window is considered and the steps 416 to 436 are repeated as necessary.

If at step 436 it is determined that there are no more time windows to evaluate then the process proceeds to step 440, where it is determined if there are any further cell outage configurations to evaluate. If it is determined at step 440 that there are further cell outage configurations to evaluate, then the method proceeds to step 442 where the next cell outage configuration is evaluated and the steps 416 to 440 are repeated as necessary.

If it is determined at step 440 that there are no further cell outage configurations to evaluate, then the method proceeds to step 444 where the method ends.

Accordingly, by using measurement snapshots from the cells in the network and determining an optimal configuration in the event of a particular network failure in a particular time window based on the measurement snapshots, the cell compensation method can take into account long-term user distribution and traffic demands according to the time at which a fault occurs.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

## Claims

1. A cell failure compensation method for a heterogeneous telecommunications network having a plurality of small cells, the method comprising:

   obtaining (302) a plurality of measurement snapshots from the plurality of the small cells in the network over a period of time, the measurement snapshots comprising a plurality of parameters;
   calculating (304) for a first cell outage configuration in a first time window, the first cell outage configuration corresponding to a network configuration in which at least one small cell (22) has failed, objective functions for small cells (16, 18, 20, 24) in the first cell outage configuration that have not failed based on the plurality of measurement snapshots; and
   determining (306) an optimal configuration for the first cell outage configuration in the first time window based on the calculated objective functions, such that in the event of a failure in the network corresponding to the first cell outage configuration in the first time window, the plurality of small cells in the network are reconfigurable based on the determined optimal configuration.

2. A method according to claim 1, further comprising:

   detecting a failure in the network in the first time window corresponding to the first cell outage configuration; and
   reconfiguring the plurality of small cells in the network based on the determined optimal configuration.

3. A method according to claim 1 or 2, wherein the first cell outage configuration is one of a plurality of cell outage configurations and the first time window is one of a plurality of time windows.

4. A method according to claim 3, wherein the method comprises determining an optimal configuration for each cell outage configuration in each time window.

5. A method according to claim 4, wherein the optimal configurations are pre-determined and pre-stored for use in the event of a cell failure in the network.

6. A method according to claim 5, further comprising:

detecting a failure of a particular small cell or cells in a particular time window;
determining which cell outage configuration corresponds to that particular failure;
retrieving the pre-stored optimal configuration for the determined cell outage configuration in the particular time window; and
reconfiguring the plurality of small cells in the network based on the retrieved optimal configuration.

7. The method according to any preceding claim, wherein the objective function is one or more Key Performance Indicators including coverage and/or capacity.

8. The method according to claim 7, wherein the step of calculating an objective function for a particular cell outage configuration in a particular time window, comprises:

combining measurement snapshots associated with the first time window to calculate the path loss from each user to the base station of each cell and the residual interference plus noise for each user from all base stations in a reference configuration.

9. The method according to claim 8, wherein the step of calculating an objective function for a particular cell outage configuration in a particular time window, further comprises:

calculating the interference from other cells in the particular cell outage configuration based on the calculated path loss from each user to the base station of each cell;
calculating the signal to noise ratio of each user in the network based on the residual interference plus noise and the calculated interference from other cells; and
estimating the achievable throughput of each user and network coverage parameters based on the calculated signal to noise ratio.

10. The method according to any preceding claim, wherein the plurality of parameters in a measurement snapshot comprises a snapshot identification, the number of active users being served by the cell, the signal to interference plus noise ratio of each of the active users, the received pilot power from other cells and own cell measured by each active user, the pilot power of the small cell, the cell selection bias values, the dedicated data transmission power per active user, and the total transmit power of the small cell, wherein the snapshot identification comprises the identification of the small cell, a sequence number of the snapshot and a time stamp.

11. The method according to any preceding claim, wherein the plurality of measurement snapshots from the plurality of the small cells are obtained in approximate synchronization.

12. The method according to any preceding claim, wherein the plurality of small cells comprise a cluster of small cells subject to outside interference.

13. The method according to any preceding claim, wherein the hours of a day are divided into a plurality of time windows on the basis of demand in the network.

14. A network node in a heterogeneous telecommunications network having a plurality of small cells, wherein the network node is operable to
receive a plurality of measurement snapshots from the plurality of the small cells in the network over a period of time, the measurement snapshots comprising a plurality of parameters;
calculate for a first cell outage configuration in a first time window, the first cell outage configuration corresponding to a network configuration in which at least one small cell has failed, objective functions for small cells in the first cell outage configuration that have not failed based on the plurality of measurement snapshots; and
determine an optimal configuration for the first cell outage configuration in the first time window based on the calculated objective functions, such that in the event of a failure in the network corresponding to the first cell outage configuration in the first time window, the plurality of small cells in the network are reconfigurable based on the determined optimal configuration.

15. A computer program product operable when executed on a computer to perform the method of claim 1.

**Patentansprüche**

1. Zellfehlerkompensierungsverfahren für ein heterogenes Telekommunikationsnetzwerk mit einer Vielzahl von kleinen Zellen, wobei das Verfahren umfasst:

Einholen (302) einer Vielzahl von Messungs-Momentaufnahmen von der Vielzahl der kleinen Zellen in dem Netzwerk über einen Zeitraum hinweg, wobei die Messungs-Momentaufnahmen eine Vielzahl von Parametern umfassen;

Berechnen (304), für eine erste Zellausfallkonfiguration in einem ersten Zeitfenster, wobei die erste Zellausfallkonfiguration einer Netzwerkkonfiguration entspricht, in der zumindest eine kleine Zelle (22) ausgefallen ist, von Zielfunktionen für kleine Zellen (16, 18, 20, 24) in der ersten Zellausfallkonfiguration, die nicht ausgefallen sind, auf der Basis der Vielzahl von Messungs-Momentaufnahmen; und

Ermitteln (306) einer optimalen Konfiguration für die erste Zellausfallkonfiguration in dem ersten Zeitfenster auf der Basis der berechneten Zielfunktionen, so dass im Fall eines Fehlers im Netzwerk, welcher der ersten Zellausfallkonfiguration in dem ersten Zeitfenster entspricht, die Vielzahl von kleinen Zellen in dem Netzwerk auf der Basis der ermittelten optimalen Konfiguration rekonfiguriert werden können.

2. Verfahren nach Anspruch 1, weiterhin umfassend:

Erkennen eines Fehlers im Netzwerk in dem ersten Zeitfenster, welcher der ersten Zellausfallkonfiguration entspricht; und

Rekonfigurieren der Vielzahl von kleinen Zellen in dem Netzwerk auf der Basis der ermittelten optimalen Konfiguration.

3. Verfahren nach Anspruch 1 oder 2, wobei die erste Zellausfallkonfiguration eine einer Vielzahl von Zellausfallkonfigurationen ist und das erste Zeitfenster eines einer Vielzahl von Zeitfenstern ist.

4. Verfahren nach Anspruch 3, wobei das Verfahren das Ermitteln einer optimalen Konfiguration für jede Zellausfallkonfiguration in jedem Zeitfenster umfasst.

5. Verfahren nach Anspruch 4, wobei die optimalen Konfigurationen vorbestimmt und für die Verwendung im Fall eines Zellausfalls im Netzwerk vorgespeichert werden.

6. Verfahren nach Anspruch 5, weiterhin umfassend:

Erkennen eines Fehlers einer bestimmten kleinen Zelle oder von Zellen in einem bestimmten Zeitfenster;

Ermitteln, welche Zellausfallkonfiguration diesem bestimmten Fehler entspricht;

Abrufen der vorgespeicherten optimalen Konfiguration für die ermittelte Zellausfallkonfiguration in dem bestimmten Zeitfenster; und

Rekonfigurieren der Vielzahl von kleinen Zellen in dem Netzwerk auf der Basis der abgerufenen optimalen Konfiguration.

7. Verfahren nach einem beliebigen der vorstehenden Ansprüche, wobei die Zielfunktion eine oder mehrere Key-Performance-Indikatoren einschließlich der Abdeckung und/oder Kapazität ist.

8. Verfahren nach Anspruch 7, wobei der Schritt des Berechnens einer Zielfunktion für eine bestimmte Zellausfallkonfiguration in einem bestimmten Zeitfenster umfasst:

Kombinieren der mit dem ersten Zeitfenster assoziierten Messungs-Momentaufnahmen, um den Pfadverlust von jedem Nutzer zur Basisstation einer jeden Zelle und die Restinterferenz plus Rauschen für jeden Nutzer von allen Basisstationen in einer Referenzkonfiguration zu berechnen.

9. Verfahren nach Anspruch 8, wobei der Schritt des Berechnens einer Zielfunktion für eine bestimmte Zellausfallkonfiguration in einem bestimmten Zeitfenster weiterhin umfasst:

Berechnen der Interferenz von anderen Zellen in der bestimmten Zellausfallkonfiguration auf der Basis des berechneten Pfadverlustes von jedem Nutzer zu der Basisstation einer jeden Zelle;
Berechnen des Signal-Rausch-Verhältnisses eines jeden Nutzers im Netzwerk auf der Basis der Restinterferenz plus Rauschen und der berechneten Interferenz von anderen Zellen; und
Schätzen des erreichbaren Durchsatzes eines jeden Nutzers und der Netzwerkabdeckungsparameter auf der Basis des berechneten Signal-zu-Rausch-Verhältnisses.

10. Verfahren nach einem beliebigen der vorstehenden Ansprüche, wobei die Vielzahl von Parametern in einer Messungs-Momentaufnahme eine Momentaufnahme-Identifikation, die Anzahl der aktiven Nutzer, die von der Zelle bedient werden, das Signalzu-Interferenz-plus-Rausch-Verhältnis eines jeden der aktiven Nutzer, den durch jeden aktiven Nutzer gemessenen empfangenen Pilotstrom von anderen Zellen und der eigenen Zelle, den Pilotstrom der kleinen Zelle, die Zellauswahl-Vorspannwerte, die dedizierte Datenübertragungsleistung pro aktiven Nutzer und die Gesamtübertragungsleistung der kleinen Zelle umfasst, wobei die Momentaufnahme-Identifikation die Identifikation der kleinen Zelle, eine Sequenznummer der Momentaufnahme und einen Zeitstempel umfasst.

11. Verfahren nach einem beliebigen der vorstehenden Ansprüche, wobei die Vielzahl von Messungs-Momentaufnahmen von der Vielzahl der kleinen Zellen in annähernder Synchronisation erhalten wird.

12. Verfahren nach einem beliebigen der vorstehenden Ansprüche, wobei die Vielzahl von kleinen Zellen ein Cluster von kleinen Zellen, die Interferenzen von außen unterliegen, umfasst.

13. Verfahren nach einem beliebigen der vorstehenden Ansprüche, wobei die Stunden eines Tages auf der Basis der Anforderung im Netzwerk in eine Vielzahl von Zeitfenstern aufgeteilt werden.

14. Netzwerkknoten in einem heterogenen Telekommunikationsnetzwerk mit einer Vielzahl von kleinen Zellen, wobei der Netzwerkknoten für Folgendes betreibbar ist:

Empfangen einer Vielzahl von Messungs-Momentaufnahmen von der Vielzahl der kleinen Zellen in dem Netzwerk über einen Zeitraum hinweg, wobei die Messungs-Momentaufnahmen eine Vielzahl von Parametern umfassen;
Berechnen, für eine erste Zellausfallkonfiguration in einem ersten Zeitfenster, wobei die erste Zellausfallkonfiguration einer Netzwerkkonfiguration entspricht, in der zumindest eine kleine Zelle ausgefallen ist, von Zielfunktionen für kleine Zellen in der ersten Zellausfallkonfiguration, die nicht ausgefallen sind, auf der Basis der Vielzahl von Messungs-Momentaufnahmen; und
Ermitteln einer optimalen Konfiguration für die erste Zellausfallkonfiguration in dem ersten Zeitfenster auf der Basis der berechneten Zielfunktionen, so dass im Fall eines Fehlers im Netzwerk, welcher der ersten Zellausfallkonfiguration in dem ersten Zeitfenster entspricht, die Vielzahl von kleinen Zellen in dem Netzwerk auf der Basis der ermittelten optimalen Konfiguration rekonfiguriert werden können.

15. Computerprogramm-Produkt, betreibbar für die Durchführung des Verfahrens gemäß Anspruch 1, wenn es auf einem Computer ausgeführt wird.

**Revendications**

1. Procédé de compensation de défaillance de cellules pour un réseau de télécommunication hétérogène présentant une pluralité de petites cellules, le procédé comprenant les étapes suivantes :

obtenir (302) une pluralité d'instantanés de mesure à partir de la pluralité des petites cellules dans le réseau au cours d'une période donnée, les instantanés de mesure comprenant une pluralité de paramètres ;
calculer (304) pour une première configuration d'indisponibilité de cellule dans une première fenêtre de temps, la première configuration d'indisponibilité de cellule correspondant à une configuration de réseau dans laquelle au moins une petite cellule (22) est défaillante, des fonctions économiques pour des petites cellules (16, 18, 20, 24) dans la première configuration d'indisponibilité de cellule qui ne sont pas défaillantes sur la base de la pluralité d'instantanés de mesure ; et

déterminer (306) une configuration optimale pour la première configuration d'indisponibilité de cellule dans la première fenêtre de temps sur la base des fonctions économiques calculées, de sorte que dans le cas d'une défaillance du réseau correspondant à la première configuration d'indisponibilité de cellule dans la première fenêtre de temps, la pluralité de petites cellules dans le réseau puisse être reconfigurée sur la base de la configuration optimale déterminée.

2. Procédé selon la revendication 1, comprenant en outre les étapes suivantes :

détecter une défaillance du réseau dans la première fenêtre de temps correspondant à la première configuration d'indisponibilité de cellule ; et
reconfigurer la pluralité de petites cellules dans le réseau sur la base de la configuration optimale déterminée.

3. Procédé selon la revendication 1 ou 2, dans lequel la première configuration d'indisponibilité de cellule est une configuration parmi une pluralité de configurations d'indisponibilité de cellule et la première fenêtre de temps est une fenêtre de temps parmi une pluralité de fenêtres de temps.

4. Procédé selon la revendication 3, dans lequel le procédé comprend la détermination d'une configuration optimale pour chaque configuration d'indisponibilité de cellule dans chaque fenêtre de temps.

5. Procédé selon la revendication 4, dans lequel les configurations optimales sont prédéterminées et préalablement stockées pour être utilisées dans le cas d'une défaillance de cellules dans le réseau.

6. Procédé selon la revendication 5, comprenant en outre les étapes suivantes :

détecter une défaillance d'une ou de plusieurs petites cellules particulières dans une fenêtre de temps particulière ; déterminer quelle configuration d'indisponibilité de cellule correspond à cette défaillance particulière ; récupérer la configuration optimale préalablement stockée pour la configuration d'indisponibilité de cellule déterminée dans la fenêtre de temps particulière ; et
reconfigurer la pluralité de petites cellules dans le réseau sur la base de la configuration optimale récupérée.

7. Procédé selon l'une quelconque des revendications précédentes, dans lequel la fonction économique est un ou plusieurs indicateurs clés de performance dont la couverture et/ou la capacité.

8. Procédé selon la revendication 7, dans lequel l'étape de calcul d'une fonction économique pour une configuration d'indisponibilité de cellule particulière dans une fenêtre de temps particulière, comprend l'étape suivante :

combiner des instantanés de mesure associés à la première fenêtre de temps pour calculer l'affaiblissement de propagation entre chaque utilisateur et la station de base de chaque cellule et l'interférence plus bruit résiduelle pour chaque utilisateur à partir de toutes les stations de base dans une configuration de référence.

9. Procédé selon la revendication 8, dans lequel l'étape de calcul d'une fonction économique pour une configuration d'indisponibilité de cellule particulière dans une fenêtre de temps particulière, comprend en outre les étapes suivantes :

calculer l'interférence à partir d'autres cellules dans la configuration d'indisponibilité de cellule particulière sur la base de l'affaiblissement de propagation calculé entre chaque utilisateur et la station de base de chaque cellule ;
calculer le rapport signal sur bruit de chaque utilisateur dans le réseau sur la base de l'interférence sur bruit résiduelle et de l'interférence calculée à partir d'autres cellules ; et
estimer le débit de chaque utilisateur qui peut être atteint et les paramètres de couverture de réseau sur la base du rapport signal sur bruit calculé.

10. Procédé selon l'une quelconque des revendications précédentes, dans lequel la pluralité de paramètres dans un instantané de mesure comprend une identification d'instantané, le nombre d'utilisateurs actifs étant desservi par la cellule, le rapport signal sur interférence plus bruit de chacun des utilisateurs actifs, la puissance pilote reçue à partir d'autres cellules et de la propre cellule mesurée par chaque utilisateur actif, la puissance pilote de la petite cellule, les valeurs de polarisation de sélection de cellules, la puissance de transmission de données dédiée par utilisateur actif et la puissance de transmission totale de la petite cellule, dans lequel l'identification d'instantané comprend l'identification de la petite cellule, d'un numéro de séquence de l'instantané et d'une estampille temporelle.

11. Procédé selon l'une quelconque des revendications précédentes, dans lequel la pluralité d'instantanés de mesure à partir de la pluralité des petites cellules est obtenue en synchronisation approximative.

12. Procédé selon l'une quelconque des revendications précédentes, dans lequel la pluralité de petites cellules comprend un groupe de petites cellules soumis à une interférence extérieure.

13. Procédé selon l'une quelconque des revendications précédentes, dans lequel les heures d'une journée sont divisées en une pluralité de fenêtres de temps selon les besoins du réseau.

14. Noeud de réseau dans un réseau de télécommunication hétérogène présentant une pluralité de petites cellules, le noeud de réseau permettant de
recevoir une pluralité d'instantanés de mesure à partir de la pluralité des petites cellules dans le réseau au cours d'une période donnée, les instantanés de mesure comprenant une pluralité de paramètres ;
calculer pour une première configuration d'indisponibilité de cellule dans une première fenêtre de temps, la première configuration d'indisponibilité de cellule correspondant à une configuration de réseau dans laquelle au moins une petite cellule est défaillante, des fonctions économiques pour des petites cellules dans la première configuration d'indisponibilité de cellule qui ne sont pas défaillantes sur la base de la pluralité d'instantanés de mesure ; et de déterminer une configuration optimale pour la première configuration d'indisponibilité de cellule dans la première fenêtre de temps sur la base des fonctions économiques calculées, de sorte que dans le cas d'une défaillance du réseau correspondant à la première configuration d'indisponibilité de cellule dans la première fenêtre de temps, la pluralité de petites cellules dans le réseau puisse être reconfigurée sur la base de la configuration optimale déterminée.

15. Produit de programme informatique permettant, lorsqu'il est exécuté sur un ordinateur, d'exécuter le procédé selon la revendication 1.

FIGURE 1

FIGURE 2

300

```
┌─────────────────────────┐
│  Obtaining measurement  │      302
│       snapshots         │
└─────────────────────────┘
            │
            ▼
┌─────────────────────────┐
│   Calculating objective │
│    functions based on   │      304
│  measurement snapshots  │
└─────────────────────────┘
            │
            ▼
┌─────────────────────────┐
│    Determining optimal  │
│   configuration based on│      306
│     objective functions │
└─────────────────────────┘
```

FIGURE 3

FIGURE 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RAQUEL BARCO.** *A Unified Framework for Self-Healing in Wireless Networks*